# EUROPÄISCHE PATENTSCHRIFT

(11) **EP 2 708 452 B1**
(45) Veröffentlichungstag und Bekanntmachung des Hinweises auf die Patenterteilung: **20.12.2017**
(21) Anmeldenummer: 13172399.1
(22) Anmeldetag: 18.06.2013
(51) Int. Cl.: B62D 35/00

(54) **Heckspoileranordnung sowie Tanksattelanhänger mit einer derartigen Heckspoileranordnung**
Rear spoiler assembly and semi-trailer tanker with such a rear spoiler assembly
Agencement de becquet arrière et semi-remorque citerne avec un tel agencement de becquet arrière

(30) Priorität: 14.09.2012 DE 102012108603
(43) Veröffentlichungstag der Anmeldung: 19.03.2014
(73) Patentinhaber: Rohr Spezialfahrzeuge GmbH, 94315 Straubing (DE)
(72) Erfinder: Janker,Wilhelm, 94336 Hunderdorf (DE)
(74) Vertreter: Glück Kritzenberger Patentanwälte PartGmbB

(56) Entgegenhaltungen:
- GB-A- 2 292 350
- JP-U- S 626 060
- US-A- 6 012 762

## Beschreibung

Die Erfindung betrifft eine Heckspoileranordnung gemäß dem Oberbegriff des Patentanspruches 1 sowie einen Tanksattelanhänger mit einer derartigen Heckspoileranordnung gemäß dem Oberbegriff des Patentanspruches 11.

Spoileranordnungen für Nutzfahrzeuge sind aus dem Stand der Technik bekannt. Diese werden üblicherweise im vorderen Bereich des Nutzfahrzeuges, insbesondere auf dem Dach der Fahrzeugkabine oder dem frontseitigen Ende des Fahrzeugaufbaus montiert, um eine Verringerung des Strömungswiderstandes des Nutzfahrzeuges zu erreichen.

Aus der GB 2 292 350 A und JP S62 6060 U sind Nutzfahrzeuge mit Vorrichtungen zur Verringerung des Luftwiderstandes prinzipiell bekannt.

Ferner ist aus der Druckschrift DE 199 60 483 A1 bereits ein Nutzfahrzeug mit Vorrichtungen zur Verringerung des Luftwiderstandes und des Sprühnebels bekannt, bei dem am heckseitigen, oberen Ende des Fahrzeugaufbaus ein einteiliges Strömungsleitelement vorgesehen ist.

Aus der US 6 0 12 762 A ist eine Heckspoileranordnung bekannt, welche mehrere, modulartig ausgebildete Spoilersegmente aufweist und an der oberen Kante der Ladeklappe eines Pick-Up Trucks befestigt ist.

Aufgabe der Erfindung ist es eine Heckspoileranordnung für einen Tanksattelanhänger eines Tankfahrzeuges bereitzustellen, welche eine Verringerung des Strömungswiderstandes des Tankfahrzeuges ermöglicht und einfach und flexibel an die jeweiligen Anforderungen des Tankfahrzeuges anpassbar ist. Die Aufgabe wird ausgehend von den Merkmalen des Oberbegriffes des Patentanspruches 1 durch dessen kennzeichnende Merkmale gelöst. Ein Tanksattelanhänger mit einer erfindungsgemäßen Heckspoileranordnung ist Gegenstand des Patentanspruches 11.

Der wesentliche Aspekt der erfindungsgemäßen Heckspoileranordnung zur Verringerung des Strömungswiderstandes eines Tankfahrzeuges mit einem Tanksattelanhänger ist darin zu sehen, dass die Heckspoileranordnung mehrere, modulartig ausgebildete Spoilersegmente aufweist, wobei die Spoilersegmente derart miteinander verbunden, dass sich eine bogenförmige, insbesondere teilkreisbogenförmige oder teilellipsenförmige Heckspoileranordnung ergibt. Besonders vorteilhaft ist damit die Heckspoileranordnung an die Bedürfnisse des Nutzers des Tanksattelanhängers anpassbar. Hierzu ist die Spoileranordnung aus mehreren Spoilersegmenten aufgebaut, die modulartig aufgebaut sind und somit einfach und schnell miteinander verbunden werden können. So kann je nach Bedarf die Spoileranordnungen in unterschiedlichen Ausbaustufen betrieben werden. Die Montage der modulartigen Spoilersegmente erfolgt im oberen Heckbereich des Tanksattelanhängers. Hierdurch ergibt sich eine Senkung des cw-Wertes, eine Verringerung von Luftverwirbelungen am Fahrzeugheck sowie eine Optimierung des Strömungswiderstandes des Tanksattelanhängers bzw. des gesamten Tankfahrzeuges. Auch ist die Spritzwasserbildung deutlich reduziert im Vergleich zu Tanksattelanhänger ohne eine erfindungsgemäße Heckspoileranordnung. Die teilkreisbogenförmige oder teilellipsenförmige Heckspoileranordnung schließt sich somit unmittelbar an den ebenfalls kreisbogenförmigen und ellipsenförmige Rand des Tankbehälters des Tanksattelanhängers an, sodass sich ein nahtloser, stromlinienförmiger Übergang von der Oberfläche des Tanksattelanhängers an die Heckspoileranordnung ergibt.

Weiterhin vorteilhaft sind die Spoilersegmente in Form von Kunststoff-Formkörpern ausgebildet, die beispielsweise einen keilförmigen Querschnitt aufweisen. Vorzugsweise sind die Spoilersegmente aus glasfaserverstärktem Kunststoff und/oder einem Kohlefaserverbundstoff hergestellt. Dadurch ergibt sich eine äußerst leichte und damit Sprit sparende Ausbildung der Heckspoileranordnung.

Gemäß einer Weiterbildung der Erfindung sind zumindest ein erstes und zweites Grundspoilersegment vorgesehen, die jeweils teilbogenförmig oder teilellipsenfiörmig ausgebildet sind und deren freie Enden miteinander verbindbar sind. Ferner umfasst die Heckspoileranordnung zumindest ein erstes und zweites Abschlussspoilersegment, welche die freien Endabschnitte der Heckspoileranordnung bilden.

In einer weiteren Ausführungsform der Erfindung weist die Heckspoileranordnung zumindest ein erstes Gehäusemodul auf, das zur Aufnahme einer Rückfahrkamera bzw. eines Rückfahrkamerasystems ausgebildet ist. Alternativ oder zusätzlich kann die Heckspoileranordnung ein zweites und drittes Gehäusemodul aufweisen, welche zur Aufnahme von Leuchten bzw. Beleuchtungseinheiten ausgebildet sind.

Die Realisierung der Verbindung der einzelnen Spoilersegmente im Bereich der freien Enden erfolgt in einer vorteilhaften Variante in der Art "Nut und Feder".

Zudem ergeben sich Weiterbildungen, Vorteile und Anwendungsmöglichkeiten der Neuerung auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Neuerung, unabhängig von ihrer Zusammenfassung in den Ansprüchen oder deren Rückbeziehung. Auch wird der Inhalt der Ansprüche zu einem Bestandteil der Beschreibung gemacht. Es zeigen:
- Fig. 1: beispielhaft eine perspektivisch Ansicht des Heckbereiches eines Tanksattelanhängers mit einer erfindungsgemäßen Heckspoileranordnung,
- Fig. 2: beispielhaft eine Frontansicht einer Ausführungsvariante einer erfindungsgemäßen Heckspoileranordnung,
- Fig. 3: beispielhaft einen Schnitt durch die erfindungsgemäße Heckspoileranordnung gemäß Figur 2 entlang der Schnittlinie A-A und
- Fig. 4: beispielhaft einen Schnitt durch die erfindungsgemäße Heckspoileranordnung gemäß Figur 2 entlang der Schnittlinie B-B.

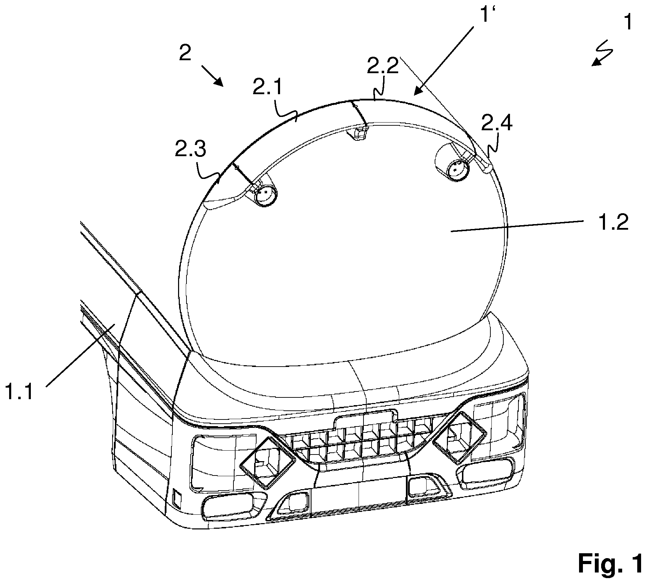

In Figur 1 ist beispielhaft eine perspektivische Heckansicht eines Tanksattelanhängers 1 eines Tankfahrzeuges dargestellt, bei dem im oberen Heckbereich 1' eine erfindungsgemäße Heckspoileranordnung 2 montiert ist.

Der Tanksattelanhänger 1 umfasst beispielsweise ein Trägerfahrwerk 1.1 und einen darauf angeordneten Tankbehälter 1.2, wobei der Tankbehälter 1.2 beispielsweise einen kreis- oder ellipsenförmigen Querschnitt aufweist. Gemäß Figur 1 erstreckt sich die erfindungsgemäße Heckspoileranordnung 2 beispielsweise entlang des oberen heckseitigen Randes des Tankbehälters 1.2, und zwar bogenförmig, insbesondere teilkreisbogenförmig oder teilellipsenförmig.

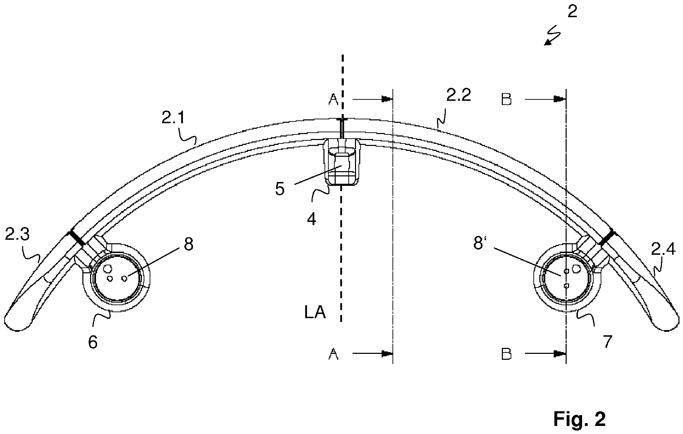

Figur 2 zeigt beispielhaft eine Frontansicht einer Ausführungsvariante der erfindungsgemäßen Heckspoileranordnung 2 zur Verringerung des Strömungswiderstandes eines Tankfahrzeuges mit einem Tanksattelanhänger 1. Erfindungsgemäß umfasst die Heckspoileranordnung 2 mehrere, modulartig ausgebildete Spoilersegmente 2.1 bis 2.4.

Die Spoilersegmente 2.1 bis 2.4 sind derart miteinander verbunden, dass sich eine bogenförmige, insbesondere teilkreisbogenförmige oder teilellipsenförmige Heckspoileranordnung 2 ergibt. Vorzugsweise ist die Heckspoileranordnung 2 symmetrischen zur Längsachse LA der Heckspoileranordnung 2 ausgeführt, wobei im montierten Zustand die Längsachse LA der Heckspoileranordnung 2 in der Längsebene des Tankbehälters 1.2 vollständig zu liegen kommt.

Die Spoilersegmente 2.1 bis 2.4 sind in Form von Kunststoff-Formkörpern ausgebildet, die beispielsweise einen keilförmigen Querschnitt aufweisen. Auch können die Spoilersegmente 2.1 bis 2.4 einen in Richtung des Tankbehälters 1.2 geöffneten Hohlraum 3 aufweisen, in dem beispielsweise eine Führung von elektrischen Verbindungskabeln oder sonstigen Versorgungsleitungen erfolgen kann. Analog zur Querschnitt der Spoilersegmente 2.1 bis 2.4 kann der Hohlraum ebenfalls keilförmig ausgebildet sein.

Die Spoilersegmente 2.1 bis 2.4 sind beispielsweise aus glasfaserverstärktem Kunststoff und/oder einem Kohlefaserverbundstoff hergestellt. Auch können diese beispielsweise mit einer Lackierung in Farbe des Tankbehälters 1.2 oder Tankfahrzeuges 1 versehen sein.

In einer Ausführungsvariante der erfindungsgemäßen Heckspoileranordnung 2 weist diese ein erstes und zweites Grundspoilersegment 2.1, 2.2 auf, welche jeweils teilbogenförmig oder teilellipsenförmig ausgebildet sind und deren zueinander gerichtete freien Enden miteinander verbindbar sind. An den gegenüberliegenden seitlichen freien weiteren Enden des ersten und zweiten Grundspoilersegmentes 2.1, 2.2 schließen sich zumindest ein erstes und zweites Abschlussspoilersegment 2.3, 2.4 an, welche die Endbereiche der Heckspoileranordnung 2 bilden. Die Verbindung der einzelnen Spoilersegmente 2.1 bis 2.4 erfolgt jeweils im Bereich der freien Enden und ist aufgrund der modulartigen Ausbildung der Spoilersegmente 2.1 bis 2.4 vorzugsweise in der Art "Nut und Feder" realisiert. Alternativ oder zusätzlich kann eine Schraubverbindung zwischen den jeweils aneinander anschließenden freien Enden der Spoilersegmente 2.1 bis 2.4 vorgesehen sein. Die nach außen gerichteten freien Enden des erstes und zweites Abschlussspoilersegment 2.3, 2.4 sind vorzugsweise leicht abgeschrägt ausgebildet.

Im verbundenen und montierten Zustand bildet die Spoilersegmente 2.1 bis 2.4 der Heckspoileranordnung 2 einen teilkreisbogenförmigen oder teilellipsenförmigen Spoiler aus, der mittels in den Figuren nicht dargestellten Halteelementen wie beispielsweise Aluwinkel oder Alukonsolen mit der Außenseite des Tankbehälters 1.2 vorzugsweise lösbar verbunden ist.

In einer bevorzugten Ausführungsform weist die Heckspoileranordnung 2 ein erstes Gehäusemodul 4, welches vorzugsweise unterhalb des Verbindungs- und Übergangsbereiches zwischen dem ersten und zweiten Grundspoilersegment 2.1, 2.2 entlang der Längsachse LA angeordnet ist und welches zur Aufnahme einer Rückfahrkamera bzw. eines Rückfahrkamerasystems 5 vorgesehen ist. Das erste Gehäusemodul 4 ist vorzugsweise lösbar mit den Grundspoilersegmenten 2.1, 2.2 verbindbar, und zwar mittels einer Steck- und/oder Schraubverbindung.

Ferner kann die Heckspoileranordnung 2 ein zweites und drittes Gehäusemodul 6, 7 aufweisen, welche vorzugsweise im Verbindungs- und Übergangsbereich zwischen dem ersten Grundspoilersegment 2.1 und dem ersten Abschlussspoilersegment 2.3 und dem zweiten Grundspoilersegment 2.2 und dem zweiten Abschlussspoilersegment 2.4 angeordnet sind und zur Aufnahme von Leuchten bzw. Beleuchtungseinheiten 8, 8' ausgebildet sind. Das zweite und dritte Gehäusemodul 6, 7 sind zur Integration von Leuchten bzw. Beleuchtungseinheiten 8, 8' in die Heckspoileranordnung 2 vorgesehen, welche modulartig zu den bestehenden Spoilersegmenten 2.1 bis 2.4 hinzukombiniert werden können.

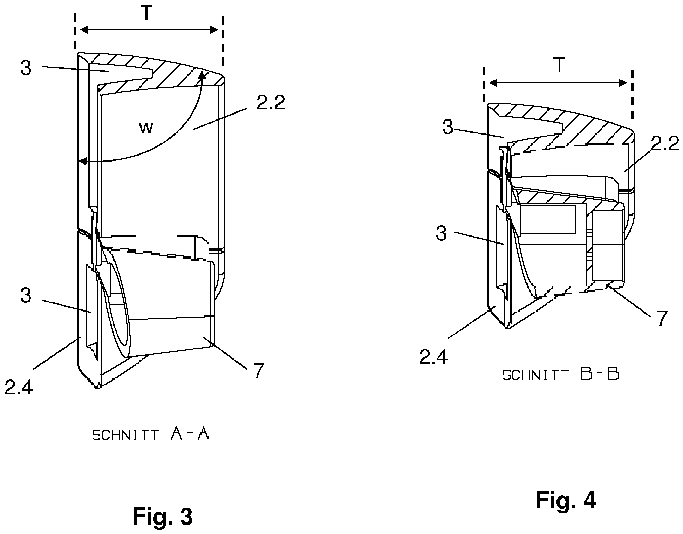

In Figur 3 ist beispielsweise ein Schnitt entlang der Schnittlinie A-A und in Figur 4 entlang der Schnittlinie B-B durch die erfindungsgemäße Heckspoileranordnung 2 gemäß Figur 2 dargestellt, aus der der keilförmige Querschnitt der Heckspoileranordnung 2 ersichtlich wird. Auch zeigt Figur 3 eine Seitenansicht des dritten Gehäusemoduls 7 und Figur 4 einen Längsschnitt durch das dritte Gehäusemoduls 7. Im Hohlraum 3 der Spoilersegmente 2.1 bis 2.4 ist eine Zuführung der elektrischen Verbindungs- und Steuerleitungen an die Gehäusemodule 4, 6, 7 bzw. die darin aufgenommene Rückfahrkamera 5 und

Beleuchtungseinheiten 8, 8' möglich. Die Tiefe T der Spoilersegmente 2.1 bis 2.4 im Bereich der Oberseite beträgt beispielsweise zwischen 275 mm und 325 mm, vorzugsweise zwischen 285 mm und 295 mm. Die Oberseite der Spoilersegmente 2.1 bis 2.4 ist beispielsweise konkav und die gegenüberliegende Unterseite konvex ausgebildet. Der Winkel w zwischen der Oberseite der Spoilersegmente 2.1 bis 2.4 und der zur Heckseite des Tankbehälters 1.2 orientierten Stirnseite der Spoilersegmente 2.1 bis 2.4 beträgt beispielsweise zwischen 75° und 85°.

Ferner ist festzustellen, dass der Verlauf der in Richtung des Tankbehälters 1.2 gerichteten Ränder der Heckspoileranordnung 2 an die Form der Heckfläche des Tankbehälters 1.2 angepasst ist.

In einer weiteren nicht in den Figuren dargestellten Ausführungsvariante können in einer weiteren Ausbaustufe der modulartigen Heckspoileranordnung 2 neben dem ersten bis dritten Gehäusemodul 4, 6, 7 auch beispielsweise zwei weitere, nicht in den Figuren dargestellte Grundspoilersegmente vorgesehen sein, deren äußerste freien Enden wiederum mit dem ersten bzw. zweiten Abschlussspoilersegment 2.3, 2.4 versehen sind.

Die erfindungsgemäße Heckspoileranordnung ist durch die modulartige Ausbildung der Spoilersegmente 2.1 bis 2.4 sowie der zugehörigen Gehäusemodule 4, 6, 7 in unterschiedlichen Ausbaustufen verfügbar und damit einfach und problemlos an die individuellen Wünsche anpassbar.

Die Erfindung wurde voranstehend an einem Ausführungsbeispiel beschrieben. Es versteht sich, dass zahlreiche Modifikationen und Änderungen der Erfindung möglich sind, ohne dass hierdurch der Erfindungsgedanke verlassen wird.

### Bezugszeichenliste

- 1: Tanksattelanhänger
- 1': oberer Heckbereich
- 1.1: Trägerfahrwerk
- 1.2: Tankbehälter
- 2: Heckspoileranordnung
- 2.1: erstes Grundspoilersegment
- 2.2: zweites Grundspoilersegment
- 2.3: erstes Abschlussspoilersegment
- 2.4: zweites Abschlussspoilersegment
- 3: Hohlraum
- 4: erstes Gehäusemodul
- 5: Rückfahrkamera bzw. Rückfahrkamerasystem
- 6: zweites Gehäusemodul
- 7: drittes Gehäusemodul
- 8, 8': Leuchten bzw. Beleuchtungseinheiten

- LA: Längsachse
- T: Tiefe
- w: Winkel

## Patentansprüche

1. Heckspoileranordnung zur Verringerung des Strömungswiderstandes eines Tankfahrzeuges mit einem Tanksattelanhänger (1), wobei die Heckspoileranordnung (2) mehrere, modulartig ausgebildete Spoilersegmente (2.1 bis 2.4) aufweist, **dadurch gekennzeichnet, dass** die Spoilersegmente (2.1 bis 2.4) derart miteinander verbunden sind, dass sich eine bogenförmige, insbesondere teilkreisbogenförmige oder teilellipsenförmige Heckspoileranordnung (2) ergibt.

2. Heckspoileranordnung nach Anspruch 1, **dadurch gekennzeichnet, dass** die Spoilersegmente (2.1 bis 2.4) in Form von Kunststoff-Formkörpern ausgebildet sind, die beispielsweise einen keilförmigen Querschnitt aufweisen.

3. Heckspoileranordnung nach Anspruch 2, **dadurch gekennzeichnet, dass** die Spoilersegmente (2.1 bis 2.4) aus glasfaserverstärktem Kunststoff und/oder einem Kohlefaserverbundstoff hergestellt sind.

4. Heckspoileranordnung nach einem der Ansprüche 1 bis 3, **dadurch gekennzeichnet, dass** zumindest ein erstes und zweites Grundspoilersegment (2.1, 2.2) vorgesehen sind, die jeweils teilbogenförmig oder teilellipsenförmig ausgebildet sind und deren freie Enden miteinander verbindbar sind.

5. Heckspoileranordnung nach einem der Ansprüche 1 bis 4, **dadurch gekennzeichnet, dass** zumindest ein erstes und zweites Abschlussspoilersegment (2.3, 2.4) vorgesehen sind, welche die freien Endabschnitte der Heckspoileranordnung (2) bilden.

6. Heckspoileranordnung nach einem der Ansprüche 1 bis 5, **dadurch gekennzeichnet, dass** die Heckspoileranordnung (2) zumindest ein erstes Gehäusemodul (4) aufweist, das zur Aufnahme einer Rückfahrkamera bzw. eines Rückfahrkamerasystems (5) ausgebildet ist.

7. Heckspoileranordnung nach Anspruch 4 und 6, **dadurch gekennzeichnet, dass** das erste Gehäusemodul (4) unterhalb des Verbindungs- und Übergangsbereiches zwischen dem ersten und zweiten Grundspoilersegment (2.1, 2.2) angeordnet ist.

8. Heckspoileranordnung nach Anspruch 6 oder 7, **dadurch gekennzeichnet, dass** die Heckspoileranordnung (2) ein zweites und drittes Gehäusemodul (6, 7) aufweist, welche zur Aufnahme von Leuchten bzw. Beleuchtungseinheiten (8, 8') ausgebildet sind.

9. Heckspoileranordnung nach Anspruch 4, 5 und 8, **dadurch gekennzeichnet, dass** das zweites Gehäusemodul (6) im Verbindungs- und Übergangsbereich zwischen dem ersten Grundspoilersegment (2.1) und dem ersten Abschlussspoilersegment (2.3) und das dritte Gehäusemodul (7) im Verbindungs- und Übergangsbereich zwischen dem zweiten Grundspoilersegment (2.2) und dem zweiten Abschlussspoilersegment 2.4 angeordnet sind.

10. Heckspoileranordnung nach einem der vorhergehenden Ansprüche, **dadurch gekennzeichnet, dass** die Verbindung der einzelnen Spoilersegmente (2.1 bis 2.4) im Bereich der freien Enden in der Art "Nut und Feder" realisiert ist.

11. Tanksattelanhänger umfassend ein Trägerfahrwerk (1.1) und einen Tankbehälter (1.2), wobei der Tankbehälter (1.2) eine kreisförmigen oder ellipsenförmigen Querschnitt aufweist, **dadurch gekennzeichnet, dass** im oberen Heckbereich (1') des Tanksattelanhängers (1) eine Heckspoileranordnung (2) gemäß einem der vorhergehenden Ansprüche angeordnet ist.

12. Tanksattelanhänger nach Anspruch 11, **dadurch gekennzeichnet, dass** sich die Heckspoileranordnung (2) zumindest abschnittsweise entlang des oberen heckseitigen Randes des Tankbehälter (1.2) erstreckt.

## Claims

1. A rear spoiler assembly for reducing the drag of a tanker vehicle with a semi-trailer tanker (1), the rear spoiler assembly (2) having a plurality of modular spoiler segments (2.1 to 2.4), **characterised in that** the spoiler segments (2.1 to 2.4) are connected to each other in such a manner that an arcuate, in particular part-circular-arc-shaped or part-ellipse-shaped rear spoiler assembly (2) is produced.

2. The rear spoiler assembly according to claim 1, **characterised in that** the spoiler segments (2.1 to 2.4) are designed in the form of moulded plastic bodies, which have a wedge-shaped cross-section, for example.

3. The rear spoiler assembly according to claim 2, **characterised in that** the spoiler segments (2.1 to 2.4) are produced from fibreglass-reinforced plastic and/or a carbon fibre composite material.

4. The rear spoiler assembly according to any one of claims 1 to 3, **characterised in that** at least a first and a second basic spoiler segment (2.1, 2.2) are provided, which are each part-arc-shaped or part-ellipse-shaped and the free ends of which can be connected to each other.

5. The rear spoiler assembly according to any one of claims 1 to 4, **characterised in that** at least a first and a second terminating spoiler segment (2.3, 2.4) are provided, which form the free end sections of the rear spoiler assembly (2).

6. The rear spoiler assembly according to any one of claims 1 to 5, **characterised in that** the rear spoiler assembly (2) has at least one first housing module (4), which is designed to accommodate a rear-view camera or rear-view camera system (5).

7. The rear spoiler assembly according to claims 4 and 6, **characterised in that** the first housing module (4) is arranged beneath the connecting and transition region between the first and second basic spoiler segments (2.1, 2.2).

8. The rear spoiler assembly according to claim 6 or 7, **characterised in that** the rear spoiler assembly (2) comprises second and third housing modules (6, 7), which are designed to accommodate lights or lighting units (8, 8').

9. The rear spoiler assembly according to claims 4, 5 and 8, **characterised in that** the second housing module (6) is arranged in the connecting and transition region between the first basic spoiler segment (2.1) and the first terminating spoiler segment (2.3), and the third housing module (7) is arranged in the connecting and transition region between the second basic spoiler segment (2.2) and the second terminating spoiler segment (2.4).

10. The rear spoiler assembly according to any one of the preceding claims, **characterised in that** the connection of the individual spoiler segments (2.1 to 2.4) in the region of the free ends is realized in a "tongue-and-groove" manner.

11. A semi-trailer tanker comprising a supporting chassis (1.1) and a tank container (1.2), the tank container (1.2) having a circular or elliptical cross-section, **characterised in that** a rear spoiler assembly (2) according to any one of the preceding claims is arranged in the upper rear region (1') of the semi-trailer tanker (1).

12. The semi-trailer tanker according to claim 11, **characterised in that** the rear spoiler assembly (2) extends at least in some sections along the upper rear edge of the tank container (1.2).

## Revendications

1. Agencement de becquet arrière pour la réduction de la résistance à l'écoulement d'un véhicule citerne comportant un semi-remorque citerne (1), l'agencement de becquet arrière (2) comportant plusieurs segments de becquet de type modulaire (2.1 à 2.4), **caractérisé en ce que** les segments de becquet (2.1 à 2.4) sont raccordés entre eux de manière à ce qu'on obtienne un agencement de becquet arrière de forme arquée, en particulier en forme de segment d'arc de cercle ou en forme de segment d'ellipse (2).

2. Agencement de becquet arrière selon la revendication 1, **caractérisé en ce que** les segments de becquet (2.1 à 2.4) sont réalisés sous forme de corps moulés en matière plastique qui présentent par exemple une section transversale cunéiforme.

3. Agencement de becquet arrière selon la revendication 2, **caractérisé en ce que** les segments de becquet (2.1 à 2.4) sont composés de plastique renforcé aux fibres de verre et/ou d'un matériau composite aux fibres de carbon.

4. Agencement de becquet arrière selon une des revendications 1 à 3, **caractérisé en ce qu'**il est prévu au moins un premier et un second segments de becquet (2.1, 2.2) qui sont conformés respectivement en forme de segments d'arc de cercle ou en forme de segments d'ellipse et dont les extrémités libres peuvent être reliées entre elles.

5. Agencement de becquet arrière selon une des revendications 1 à 4, **caractérisé en ce qu'**il est prévu au moins un premier et un second segments terminaux de becquet (2.3, 2.4) qui constituent les extrémités terminales libres de l'agencement de becquet arrière (2).

6. Agencement de becquet arrière selon une des revendications 1 à 5, **caractérisé en ce que** l'agencement de becquet arrière (2) présente au moins un premier module de boîtier (4) qui est conçu pour recevoir une caméra de recul ou un système de caméra de recul (5).

7. Agencement de becquet arrière selon les revendications 4 et 6, **caractérisé en ce que** le premier module de boîtier (4) est disposé en dessous de la zone de liaison et de transition entre le premier et le second segment de becquet de base (2.1, 2.2).

8. Agencement de becquet arrière selon la revendication 6 ou 7, **caractérisé en ce que** l'agencement de becquet arrière (2) présente un deuxième et troisième modules de boîtier (6, 7) qui sont conçus pour recevoir des luminaires ou des unités d'éclairage (8, 8').

9. Agencement de becquet arrière selon les revendications 4, 5 et 8, **caractérisé en ce que** le deuxième module de boîtier (6) est disposé dans la zone de liaison et de transition entre le premier segment de becquet de base (2.1) et le premier segment de becquet terminal (2.3) et le troisième module de boîtier (7) est disposé dans la zone de liaison et de transition entre le second segment de becquet de base (2.2) et le second segment de becquet terminal (2.4).

10. Agencement de becquet arrière selon une des revendications précédentes, **caractérisé en ce que** le raccordement des segments individuels de becquet (2.1 à 2.4) est réalisé au niveau des extrémités libres en mode « rainure et languette ».

11. Semi-remorque citerne comprenant un train de roulement porteur (1.1) et une citerne (1.2), la citerne (1.2) présentant une section transversale circulaire ou elliptique, **caractérisé en ce que**, dans la zone arrière supérieure (1') du semi-remorque citerne (1), est disposé un agencement de becquet arrière (2) selon une des revendications précédentes.

12. Semi-remorque citerne selon la revendication 11, **caractérisé en ce que** l'agencement de becquet arrière (2) s'étend par sections le long du bord arrière supérieur de la citerne (1.2).
